# EUROPÄISCHE PATENTSCHRIFT

(11) **EP 3 916 314 B1**
(45) Veröffentlichungstag und Bekanntmachung des Hinweises auf die Patenterteilung: **03.04.2024**
(21) Anmeldenummer: 21158582.3
(22) Anmeldetag: 23.02.2021
(51) Int. Cl.: F24F 7/08, F24F 12/00, F24F 13/24, F24F 11/00

(54) **LÜFTUNGSSYSTEM**
VENTILATION SYSTEM
SYSTÈME DE VENTILATION

(30) Priorität: 26.05.2020 EP 20176672
(43) Veröffentlichungstag der Anmeldung: 01.12.2021
(73) Patentinhaber: Felix & Co AG, 5412 Gebenstorf (CH)
(72) Erfinder: Felix, Thomas, 5413 Birmenstorf (CH)
(74) Vertreter: Herrmann, Johanna

(56) Entgegenhaltungen:
- EP-A1- 1 559 963
- EP-A1- 3 173 706
- EP-A2- 1 788 317
- EP-A2- 1 862 744
- EP-A2- 2 613 099
- DE-A1- 4 135 130

## Beschreibung

### Hintergrund

Die vorliegende Erfindung betrifft ein Lüftungssystem zur Belüftung eines Gebäudes. Insbesondere betrifft die Erfindung ein Lüftungssystem eines geschlossenen Raums oder einer Mehrzahl von Räumen, beispielsweise eines Zimmers in einer Wohnung oder in einem Wohnhaus.

### Stand der Technik

Aus der EP 2 613 099 A2 ist ein Raumlüftungssystem bekannt, welches die Steuerungen verschiedener in einem oder mehreren Räumen befindlicher Geräte, die eine Veränderung des Luftdrucks bewirken können, wie beispielsweise Lüftungsgeräte, Dunstabzüge, die mindestens teilweise mit eigenen Stell- oder Steuermitteln versehen sind, an eine zentrale Steuerung koppelt. Hierzu überwacht die zentrale Steuerung den Betriebszustand dieser Geräte und überprüft Messwerte von Druckmessgeräten in den Räumen und im Aussenbereich. Bei zu hohen Differenzdrücken zum Umgebungsluftdruck wird dem Raum Aussenluft zugeführt. Somit ermöglicht dieses Raumlüftungssystem eine selbsttätige Regulierung eines in einem Raum entstehenden Differenzdrucks.

Bei einem unzulässigen Druckabfall werden mittels der zentralen Steuerung gleichzeitig ein oder mehrere separate Lüftungsgeräte betätigt. Zudem wird bei Druckabfall ein Aussenluftdurchlass automatisch betätigt oder ein Lüftungsfenster ist vorgesehen, wobei das oder die Lüftungsgeräte in eine Betriebsstellung schalten, in welcher dem Raum Aussenluft in steuerbarer Menge zum Ausgleichen des Unterdrucks zugeführt wird. Die zentrale Steuerung ist mit einer Druckmessstelle für den Referenz-Aussendruck und mit einer Druckmessstelle für den Innenluftdruck bzw. einen Differenzdruck versehen.

Dieses Lüftungssystem hat den Nachteil, dass die Steuerung aufgrund der Auswertung einer Vielzahl von Sensordaten komplex aufgebaut ist und damit einer kontinuierlichen Überprüfung und Funktionskontrolle bedarf. Zudem differieren die Grössenordnungen der Volumenströme, welche beispielsweise durch eine Dunstabzughaube erzeugt werden, von den Volumenströmen, welche für die Belüftung eines Wohn- oder Schlafraums benötigt werden, derart, dass hierfür das im Dokument erwähnte separate Zuluftgerät erforderlich ist.

Ein Volumenstrom einer durch eine Dunstabzughaube abgesaugten Abluft liegt üblicherweise in einem Bereich 300 bis 700 m³/h. Beispielsweise beträgt der Volumenstrom für einen Durchmesser von d=160 mm 400 m³/h. Für eine kontrollierte Wohnraumlüftung beträgt der Volumenstrom der Zuluft bei Normallüftung 120 m³/h. Bei Intensivlüftung beträgt der Volumenstrom 180 m³/h. Würde daher diese Dunstabzughaube in einem Raum betrieben, der mittels kontrollierter Wohnraumlüftung mit Zuluft versorgt wird, entsteht im Raum durch den wesentlich höheren Abluftstrom ein unzulässiger Unterdruck. Um die Entstehung eines unzulässigen Unterdrucks im Raum zu verhindern, ist daher eine komplexe Steuerung sowie ein Wohnraum-Lüftungsgerät erforderlich.

Gemäss eines weiteren Ausführungsbeispiels wird durch den Betrieb eines Cheminées oder Schwedenofens ein Unterdruck von ca. 80 Pascal (Pa) im Raum erzeugt. Für eine kontrollierte Wohnraumlüftung beträgt der maximal zulässige Unterdruck 4 Pa. Daher sind auch für diese Anwendung eine komplexe Steuerung sowie ein Wohnraum-Lüftungsgerät erforderlich, um den Unterdruck im zulässigen Bereich zu halten.

Um das Entstehen des unzulässigen Unterdrucks zu verhindern, ist somit gemäss EP 2 613 099 A2 eine komplexe, zentrale Steuerung, welche gleichzeitig ein oder mehrere separate Lüftungsgeräte betätigt, erforderlich. Folglich ist die Lösung gemäss EP 2 613 099 A2 mit zusätzlichen Anschaffungs- und Betriebskosten für die Steuerung und das Wohnraum-Lüftungsgerät verbunden.

Daher besteht Bedarf an einem Lüftungssystem, in welchem der maximal zulässige Differenzdruck in sämtlichen Wohnräumen ohne zusätzliche Steuerung zuverlässig eingehalten werden kann.

Ein weiteres Lüftungssystem 100 ist in der CN107797323U gezeigt, siehe hierzu Fig. 2. Das Lüftungssystem besteht aus einem Innenraummodul 101 und einem Aussenraummodul 102. Das Aussenraummodul 102 enthält einen Wärmetauscher 103. Das Aussenraummodul 102 enthält auch einen Ventilator 105, mittels welchem Aussenluft über den Einlassstutzen 106 angesaugt wird und über einen Filter 108 zum Wärmetauscher 103 geleitet wird. Im Wärmetauscher 103 kann die Aussenluft in Abhängigkeit von der von einem Temperatursensor 116 gemessenen Temperatur erwärmt werden und über eine Frischluftleitung 113 vom Wärmetauscher 103 in eine Sterilisationskammer 120 geleitet werden. Die sterilisierte, erwärmte Aussenluft wird dann über den Luftauslass 122 in einen nicht dargestellten Innenraum eingeleitet. Der Microcontroller 115 schaltet den Wärmetauscher 103 ab, wenn die mittels des Temperatursensors 116 gemessene Temperatur der Aussenluft hoch genug ist, sodass sich deren Erwärmung erübrigt. Im Innenraummodul 101 befindet sich ein Ventilator 117, welcher Abluft aus dem Innenraum über eine Abluftleitung 118 ansaugt und mittels der Luftauslassleitung 119 dem Wärmetauscher 103 zuführt. Eine Abluftleitung 114 führt vom Wärmetauscher 103 in die Umgebung.

Gemäss diesem Ausführungsbeispiel ist das Lüftungssystem nicht kontinuierlich in Betrieb, da es für einen sterilen Raum eingesetzt ist, dessen Temperatur geregelt wird. Daher wird der Wärmetauscher 103 vom Microcontroller 115 abgeschaltet, wenn die Aussentemperatur über einen bestimmten Schwellwert steigt.

Dieses Lüftungssystem basiert ausschliesslich auf einer Temperaturregelung. Es ist in diesem Dokument nicht beschrieben, dass andere Parameter, beispielsweise der Innendruck, im sterilen Raum erfasst, das heisst, gemessen würden oder in irgendeiner Weise geregelt würden. In ähnlicher Weise basiert auch das in der EP 1 862 744 A2 gezeigte Lüftungssystem auf einer Temperaturregelung, wobei gemäss dieser Variante ein Absperrventil einer Küchenhaube zum Schutz vor Überhitzung betätigt wird und eine Umschalteinrichtung zwischen der Abluftleitung der Küchenhaube und einer weiteren Abluftleitung vorgesehen ist, die ebenfalls geöffnet wird, wenn Gefahr einer Überhitzung besteht. Weitere gattungsgemässe Lüftungssysteme sind in den Dokumenten EP 1 788 317 A2, EP 3 173 706 A1, EP 1 559 963 A1 oder DE 41 35 130 A1 offenbart.

Es besteht daher Bedarf an einem Lüftungssystem, welches das Einhalten eines maximal zulässigen Differenzdrucks im Raum und ausserhalb des Raums, d.h. in der Umgebung des Raums, mit einer einfachen Steuerung ermöglicht.

### Aufgabe der Erfindung

Es ist Aufgabe der Erfindung, ein Lüftungssystem zu entwickeln, welches einfach und kostengünstig hergestellt werden kann. Eine weitere Aufgabe der Erfindung ist es, ein Lüftungssystem zu entwickeln, mittels welchem der Differenzdruck ohne zusätzliche Steuerung im zulässigen Bereich gehalten werden kann. Eine weitere Aufgabe der Erfindung ist es, ein Lüftungssystem zu entwickeln, welches im Betrieb wartungsfrei ist und nicht anfällig für Störungen ist.

### Beschreibung der Erfindung

Die Lösung der Aufgabe der Erfindung erfolgt durch ein Lüftungssystem gemäss Anspruch 1. Vorteilhafte Ausführungsbeispiele des Lüftungssystems sind Gegenstand der Ansprüche 2 bis 15.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für das erfindungsgemässe Lüftungssystem. Die Beschreibung eines bestimmten Lüftungssystems ist nur als beispielhaft anzusehen. In der Beschreibung und den Ansprüchen werden die Begriffe "enthalten", "umfassen", "aufweisen" als "enthalten, aber nicht beschränkt auf" interpretiert.

Das erfindungsgemässe Lüftungssystem zur Belüftung eines Gebäudes umfasst einen Raum, ein Raumlüftungsmodul und ein Wärmetauschermodul, wobei dem Wärmetauschermodul Aussenluft über ein Einlasselement zuführbar ist und Abluft über ein Auslasselement als Fortluft abführbar ist. Das Wärmetauschermodul ist vom Raumlüftungsmodul durch eine Raumbegrenzung räumlich getrennt, wobei sich das Wärmetauschermodul ausserhalb des Raums befindet. Das Raumlüftungsmodul ist im Raum angeordnet. Der Raum enthält mindestens eine temporär zuschaltbare Luftquelle oder Luftsenke. Eine erste Verbindungsleitung ist zum Transport der Zuluft vom Wärmetauschermodul zum Raumlüftungsmodul ausgebildet. Eine zweite Verbindungsleitung ist zum Transport der Abluft vom Raumlüftungsmodul zum Wärmetauschermodul ausgebildet. Das Raumlüftungsmodul enthält einen ersten Ventilator zum Transport der Zuluft durch die erste Verbindungsleitung in den Raum und einen zweiten Ventilator zum Transport der Abluft durch die zweite Verbindungsleitung aus dem Raum, wobei der erste Ventilator und der zweite Ventilator bei einer Inbetriebnahme der temporär zuschaltbaren Luftquelle oder Luftsenke im Raum abschaltbar sind.

Wenn die Luftquelle oder Luftsenke im Raum in Betrieb genommen wird, verändert sich der Luftdruck im Raum. Somit kann eine Druckdifferenz zwischen dem Luftdruck im Raum und dem Luftdruck ausserhalb des Raums, beispielswese gegen den Aussenbereich, entstehen.

Die Luftquelle oder Luftsenke ist als eine raumluftabhängige Vorrichtung ausgebildet.

Unter einer raumluftabhängigen Vorrichtung versteht man eine Luftquelle oder eine Luftsenke, mittels welcher dem Raum Luft entnommen wird oder Luft in den Raum eingespeist wird. Die zulässige Druckdifferenz zwischen dem Luftdruck im Raum und dem Luftdruck ausserhalb des Raums ist insbesondere für eine im Raum befindliche raumluftabhängige Vorrichtung auf maximal 4 Pascal (Pa) begrenzt.

Das erfindungsgemässe Lüftungssystem ist mit einer Regelung von Zu- und Abluft für einen konstanten Volumenstrom ausgestattet, welche keine Druckdifferenz im Raum entstehen lässt. Das Lüftungssystem ist mit einer integrierten Störungsüberwachungseinheit ausgestattet. Sobald eine Luftquelle oder Luftsenke eingeschaltet wird, erkennt die Störungsüberwachungseinheit diese Situation und schaltet den ersten und zweiten Ventilator temporär aus, damit die Sicherheit und Funktion der Wohnungseinrichtung nicht gestört werden.

Luftquellen oder Luftsenken können beispielsweise Küchenablufthauben, Abluftanlagen im Sanitärbereich, zentrale Staubsaugeranlagen umfassen.

Gemäss einem Ausführungsbeispiel enthält das Wärmetauschermodul keinen Ventilator. Gemäss einem Ausführungsbeispiel enthält das Raumlüftungsmodul einen Lufterwärmer. Der Lufterwärmer dient zur Erwärmung der Abluft, bevor sie durch die weitere Verbindungsleitung vom Raumlüftungsmodul zum Wärmetauscher des Wärmetauschermoduls geführt wird. Gemäss diesem Ausführungsbeispiel kann somit die Abluft vorgewärmt werden, sodass die Zuluft, welche den Wärmetauscher im Gegenstrom oder Kreuzstrom durchströmt, durch die vorgewärmte Abluft erwärmt werden kann.

Ein Wärmetauscher unterscheidet sich gemäss nachfolgender Definition von einem Lufterwärmer: In einem Wärmetauscher wird Wärme zwischen zwei Fluidströmen ausgetauscht, in einem Lufterwärmer wird ein einziger Fluidstrom erwärmt. Bei den Fluidströmen kann es sich um Flüssigkeiten, Gase oder um zweiphasige Gemische handeln. Der erste Fluidstrom wird in einem Wärmetauscher von einer niedrigeren Temperatur auf eine höhere Temperatur erwärmt. Der zweite Fluidstrom wird in einem Wärmetauscher von einer höheren Temperatur auf eine niedrigere Temperatur abgekühlt.

Im Lufterwärmer wird nur ein einziger Fluidstrom erwärmt. Die Erwärmung erfolgt dabei beispielsweise mittels einer Wärmequelle, beispielsweise durch die Wärmeabgabe eines im Fluidstrom befindlichen elektrischen Widerstands. Der Fluidstrom wird an der Wärmequelle vorbeigeführt und erwärmt sich durch Kontakt mit der Wärmequelle.

Gemäss einem Ausführungsbeispiel ist zumindest ein Messwertaufnehmer aus der Gruppe enthaltend einen Temperatursensor, einen Luftfeuchtigkeitssensor oder einen Sensor zur Detektion von Schadstoffen, beispielsweise einen VOC-Sensor, oder ein Sensor zur Detektion einer Konzentration von CO₂ vorgesehen. Gemäss einem Ausführungsbeispiel ist ein Temperatursensor zur Ermittlung der Temperatur der Zuluft stromabwärts des Wärmetauschermoduls vorgesehen. Der Temperatursensor kann insbesondere an der Verbindungsleitung zum Raumlüftungsmodul angebracht sein, um die Temperatur der in der Verbindungsleitung strömenden Zuluft zu ermitteln. Der Temperatursensor kann Temperaturmesswerte für eine Regeleinrichtung liefern. Mit der Regeleinrichtung kann der Lufterwärmer in Betrieb genommen werden, wenn die Temperatur unter einen bestimmten Minimalwert absinkt. Der Minimalwert kann in einer Speichereinheit der Regeleinrichtung gespeichert sein oder manuell eingegeben werden. Insbesondere können Einstellmittel vorgesehen werden, um den Minimalwert für die Temperatur einzustellen. Beispielsweise kann der Minimalwert 16 Grad Celsius betragen.

Gemäss einem Ausführungsbeispiel ist eine Regeleinrichtung vorgesehen, mittels welcher der Lufterwärmer zur Erwärmung der Abluft oder der Zuluft einschaltbar ist, wenn die Temperatur unter den Minimalwert absinkt. Mit der Regeleinrichtung kann der Lufterwärmer abgeschaltet werden, wenn der Minimalwert erreicht ist, oder dieser Minimalwert überschritten ist. Insbesondere kann der erste oder zweite Ventilator einstellbar sein, sodass der in den Raum einströmende Volumenstrom der Zuluft und der Abluft veränderbar ist. Der Ventilator kann stufenweise zur Erzeugung von mindestens zwei Lüftungsstufen oder kontinuierlich einstellbar sein. Beispielsweise können mindestens zwei, insbesondere mindestens drei verschiedene Lüftungsstufen eingestellt werden, sodass der Raum mit einem der jeweiligen Lüftungsstufe entsprechenden konstanten Volumenstrom an Zuluft versorgt wird und ein konstanter Volumenstrom an Abluft entnommen wird.

Gemäss einem Ausführungsbeispiel ist dem Wärmetauschermodul die Aussenluft über eine Luftleitung zuführbar, wobei die Luftleitung vom Einlasselement zu einem Einlassfilter und zu einem Wärmetauscher führt. Der Einlassfilter kann Partikel, beispielsweise Staub, aus der Aussenluft entfernen, welche sich im Wärmetauscher oder nachgeschalteten Bauteilen ablagern kann und/oder zu Kontamination oder zu einer erhöhten Staubpartikelbelastung der dem Raum zugeführten Zuluft führen kann.

Gemäss einem Ausführungsbeispiel enthält das Raumlüftungsmodul einen ersten Filter, einen ersten Ventilator und/oder einen Schalldämpfer. Die mit dem Wärmetauschermodul verbundene erste Verbindungsleitung kann mit dem ersten Filter, dem ersten Ventilator oder dem ersten Schalldämpfer verbunden sein. Der erste Filter, der erste Ventilator und/oder der erste Schalldämpfer können über eine erste Zuluftleitung miteinander in beliebiger Reihenfolge verbunden sein. Insbesondere kann der erste Filter über die erste Zuluftleitung mit dem ersten Ventilator verbunden sein. Der erste Ventilator kann über die erste Zuluftleitung mit dem ersten Schalldämpfer verbunden sein.

Gemäss einem Ausführungsbeispiel kann eine zweite Zuluftleitung vom Raumlüftungsmodul in einen Zuluftdurchlass zur Belüftung des Raums mit Zuluft führen.

Gemäss einem Ausführungsbeispiel ist die Abluft dem Raumlüftungsmodul von einem Abluftdurchlass in einer ersten Abluftleitung zuführbar. Insbesondere kann die Abluft im Raumlüftungsmodul einem zweiten Ventilator zuführbar sein. Die Abluft kann mittels der zweiten Abluftleitung vom zweiten Ventilator zum Lufterwärmer führen. Der Lufterwärmer ist insbesondere über die zweite Verbindungsleitung mit dem Wärmetauschermodul verbunden.

Die Abluft ist gemäss einem Ausführungsbeispiel mittels der ersten Abluftleitung, einem zweiten Schalldämpfer und/oder einem zweiten Filter zuführbar, wobei eine zweite Abluftleitung vom zweiten Schalldämpfer und/oder vom zweiten Filter zum zweiten Ventilator verläuft, wobei die Abluft mittels der zweiten Abluftleitung vom zweiten Ventilator zum Lufterwärmer führbar ist. Die Abluft ist gemäss einem bevorzugten Ausführungsbeispiel mittels der zweiten Abluftleitung dem zweiten Schalldämpfer zuführbar. Stromabwärts des zweiten Schalldämpfers kann der zweite Filter angeordnet sein, wobei eine zweite Abluftleitung vom zweiten Schalldämpfer zum zweiten Filter verläuft, sodass die Abluft im Betriebszustand durch den zweiten Filter strömen kann, sodass eine gefilterte Abluft erhältlich ist. Die gefilterte Abluft ist gemäss diesem Ausführungsbeispiel mittels der zweiten Abluftleitung dem zweiten Ventilator zuführbar, wobei die gefilterte Abluft mittels der zweiten Abluftleitung vom zweiten Ventilator zum Lufterwärmer führbar ist. Insbesondere kann der Lufterwärmer über die zweite Verbindungsleitung mit dem Wärmetauschermodul verbunden sein.

Gemäss einem Ausführungsbeispiel ist dem Wärmetauscher über die zweite Verbindungsleitung eine erwärmte Abluft vom Lufterwärmer zuführbar, wobei die erwärmte Abluft im Wärmetauscher zum Wärmetausch mit der Zuluft einsetzbar ist. Eine abgekühlte Abluft kann über eine dritte Abluftleitung zum Auslasselement zum Austritt aus dem Wärmetauschermodul führbar sein.

Gemäss einem Ausführungsbeispiel ist dem Wärmetauscher über die zweite Verbindungsleitung eine gefilterte, erwärmte Abluft vom Lufterwärmer zuführbar, wobei die gefilterte, erwärmte Abluft im Wärmetauscher zum Wärmetausch mit der Zuluft einsetzbar ist, wobei eine abgekühlte gefilterte Abluft über eine dritte Abluftleitung zum Auslasselement zum Austritt aus dem Wärmetauschermodul führbar ist. Die das Auslasselement verlassende Abluft wird als Fortluft bezeichnet.

Gemäss einem Ausführungsbeispiel enthält der Wärmetauscher ein Element aus der Gruppe bestehend aus einem Gegenstromwärmetauscher, einem Kreuzstromwärmetauscher, einem Plattenwärmetauscher und einem Enthalpiewärmetauscher.

Gemäss einem Ausführungsbeispiel ist zumindest der Wärmetauscher ausserhalb des Raums oder einer Mehrzahl von Räumen angeordnet.

Gemäss einem Ausführungsbeispiel enthält zumindest eine der ersten Verbindungsleitungen und zweiten Verbindungsleitungen keine Wärmedämmung. Auf die Isolierung der ersten oder zweiten Verbindungsleitung kann verzichtet werden, wenn sie innerhalb des Dämmperimeters des Gebäudes angeordnet ist und gegebenenfalls erwärmte Aussenluft vom Wärmetauschermodul enthält. Durch die erforderlichen geringeren Aussendurchmesser wird der Platzbedarf für die ersten und zweiten Verbindungsleitungen verringert. Mittels des erfindungsgemässen Lüftungssystems wird die Zuluft und Abluft vorgewärmt, dass keine Kondensation von Wasser durch Taupunktausscheidung aus der die Verbindungsleitung umgebenden Luft in einem Installationsschacht, in einer Installationswand oder an den Wänden der ersten und zweiten Verbindungsleitungen erfolgt. Daher kann überraschenderweise auf eine Wärmedämmung der ersten und zweiten Verbindungsleitungen verzichtet werden.

Im Wärmetauscher erfolgt eine Abkühlung der Abluft. Gemäss einem Ausführungsbeispiel ist eine abgekühlte Abluft über eine dritte Abluftleitung zum Auslasselement zum Austritt aus dem Wärmetauschermodul führbar. Insbesondere weist das Einlasselement eine Einlassöffnung auf, die im Wesentlichen in einem rechten Winkel zu einer Auslassöffnung des Auslasselements angeordnet ist. Gemäss diesem Ausführungsbeispiel kann das Einlasselement in der Nähe des Auslasselements angeordnet sein, da die Aussenluft, die durch das Einlasselement ins Lüftungssystem gelangt, nicht mit der Fortluft in Kontakt treten kann, die das Lüftungssystem über das Auslasselement verlässt.

Mittels eines erfindungsgemässen Lüftungssystems kann die Luft gleichmässig und dem hygienischen Bedarf entsprechend erneuert werden. Das Lüftungssystem kann Feuchte sowie übliche Gerüche und Baustoffemissionen kontinuierlich abführen. Das Lüftungssystem kann bei gesicherter Lufterneuerung vor Aussenlärm schützen. Mittels des Lüftungssystems können Staub oder Pollen zurückgehalten werden. Mittels des Lüftungssystems kann die Lufterneuerung bei allen Wetterlagen gewährleistet werden. Das Lüftungssystem kann zusammen mit einer Klimaanlage oder einer Heizungsanlage verwendet werden, ersetzt aber weder eine Klimaanlage noch eine Heizungsanlage. Optional können Vorrichtungen zur Rückgewinnung von Feuchte eingesetzt werden. Wenn mittels des Lüftungssystems unangenehme Gerüche zurückgehalten werden sollen, kann ein Aktivkohlefilter zum Einsatz kommen.

### Kurzbeschreibung der Zeichnungen

Nachfolgend wird das erfindungsgemässe Lüftungssystem anhand einiger Ausführungsbeispiele dargestellt. Es zeigen
Fig. 1 eine Anordnung eines erfindungsgemässen Lüftungssystems in einem Gebäude,
Fig. 2 eine schematische Darstellung eines vorbekannten Lüftungssystems,
Fig. 3 eine schematische Darstellung eines Lüftungssystems gemäss einem ersten Ausführungsbeispiel der Erfindung mit Varianten,
Fig. 4 eine Ansicht eines ersten Ausführungsbeispiels einer Anordnung eines Einlasselements und eines Auslasselements für ein Lüftungssystem nach einem der vorhergehenden Ausführungsbeispiele
Fig. 5a eine erste Ansicht eines zweiten Ausführungsbeispiels einer Anordnung eines Einlasselements und eines Auslasselements für ein Lüftungssystem nach einem der vorhergehenden Ausführungsbeispiele,
Fig. 5b eine zweite Ansicht des zweiten Ausführungsbeispiels einer Anordnung eines Einlasselements und eines Auslasselements für ein Lüftungssystem nach einem der vorhergehenden Ausführungsbeispiele,
Fig. 5c eine schematische Darstellung eines Luftstroms für ein exemplarisches Ausführungsbeispiel,
Fig. 6 eine schematische Darstellung eines Lüftungssystems gemäss einem zweiten Ausführungsbeispiel der Erfindung mit Varianten,
Fig. 7 ein Ausführungsbeispiel eines Wärmetauschers,
Fig. 8 ein Ausführungsbeispiel eines Wärmetauschers und eines Lufterwärmers.

### Detaillierte Beschreibung der Zeichnungen

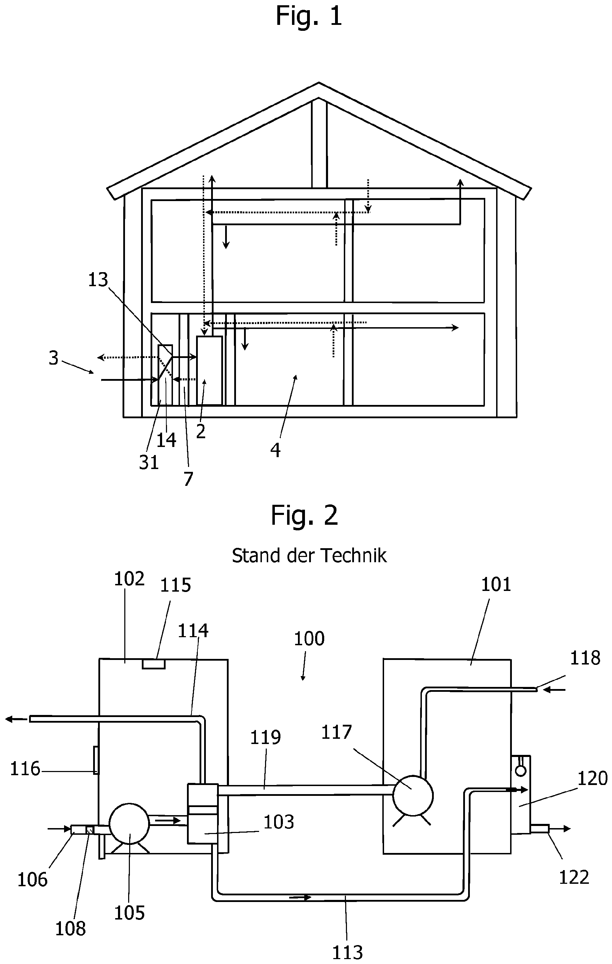

Fig. 1 zeigt ein Lüftungssystem 1, welches einen Raum 4, ein Raumlüftungsmodul 2 und ein Wärmetauschermodul 3 umfasst. Das Wärmetauschermodul 3 ist vom Raumlüftungsmodul 2 räumlich durch eine Raumbegrenzung 7 getrennt, wobei sich das Wärmetauschermodul 3 ausserhalb des Raums 4 befindet.

Fig. 2 zeigt das aus CN107797323U vorbekannte Lüftungssystem 100, welches einleitend beschrieben worden ist.

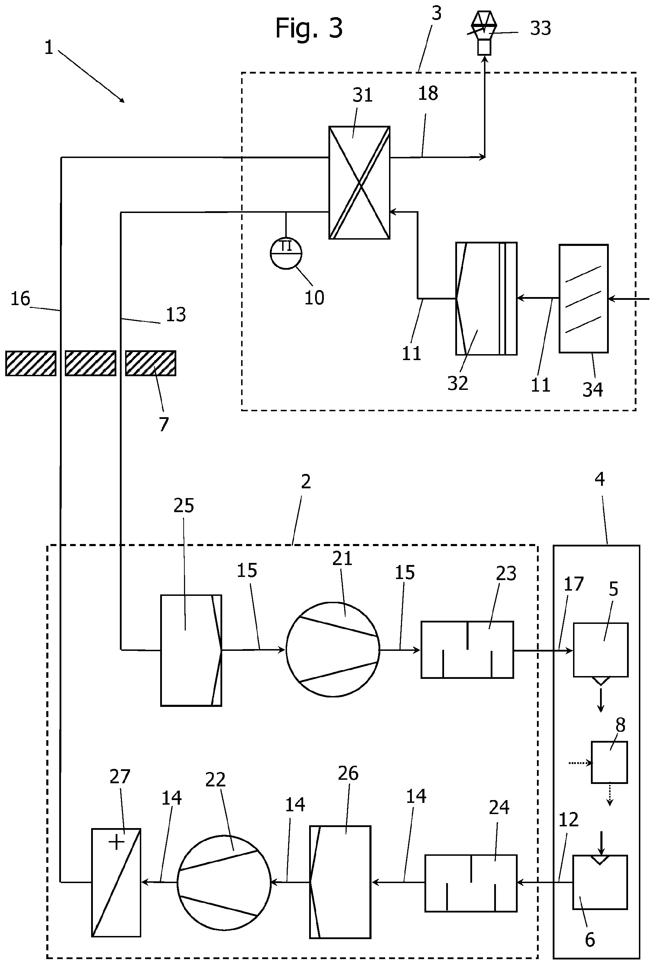

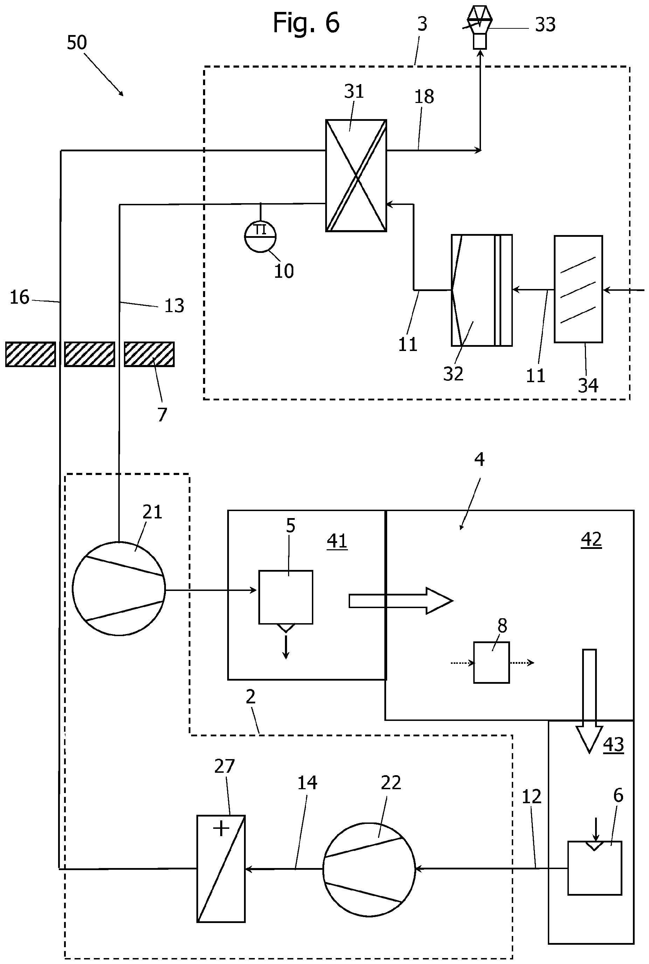

Fig. 3 zeigt eine schematische Darstellung eines Lüftungssystems 1, welches einen Raum 4, ein Raumlüftungsmodul 2 und ein Wärmetauschermodul 3 umfasst. Das Raumlüftungsmodul 2 ist im Raum 4 angeordnet, das Wärmetauschermodul (3) ist ausserhalb des Raums (4) angeordnet. Dem Wärmetauschermodul 3 ist Aussenluft als ein Umgebungsluftstrom über eine Zuluftleitung 11 zuführbar. Die Zuluftleitung 11 führt von einem Einlasselement 34, welches ein Einlasswetterschutzgitter umfassen kann, zu einem Wärmetauscher 31. In der Zuluftleitung 11 befindet sich gemäss diesem Ausführungsbeispiel ein Einlassfilter 32, der beispielsweise als Rollbandfilter ausgebildet ist. Wenn der Einlassfilter 32 als Rollbandfilter ausgebildet ist, kann dieser mittels eines Photovoltaikmoduls und/oder einem Akku betrieben werden. Wenn eine Kombination eines Photovoltaikmoduls mit einem Akku vorgesehen ist, kann der Akku als Energiespeicher dienen. Eine erste Verbindungsleitung 13 führt vom Wärmetauscher 31 zum Raumlüftungsmodul 2, wobei das Raumlüftungsmodul 2 einen ersten Filter 25, einen ersten Ventilator 21 und einen ersten Schalldämpfer 23 enthält. Die erste Verbindungsleitung 13 führt zum ersten Filter 25. Vom ersten Filter 25 führt die erste Zuluftleitung 15 zum ersten Ventilator 21. Der erste Ventilator 21 ist über die erste Zuluftleitung 15 mit dem ersten Schalldämpfer 23 verbunden. Eine zweite Zuluftleitung 17 führt vom Raumlüftungsmodul 2 in einen Zuluftdurchlass 5 zur Belüftung des Raums 4 mit Zuluft. Die zweite Zuluftleitung 17 führt gemäss dem vorliegenden Ausführungsbeispiel vom ersten Schalldämpfer 23 zum Zuluftdurchlass 5, der sich im Raum 4 befindet. Mit Aussenluft ist hierbei die Luft gemeint, welche das Gebäude umgibt, oder Umgebungsluft, insbesondere Frischluft. Mit Zuluft ist der Luftstrom der Aussenluft im Innenraum des Gebäudes gemeint, der dem Raum 4 oder einem Raum, der mehrere Teilräume 41, 42, 43 umfassen kann (siehe Fig. 6), zugeführt wird. Mit Fortluft ist die in die Umgebung emittierte Abluft gemeint, also die Abluft stromabwärts des Auslasselements 33. Mit Abluft ist somit die aus dem Raum 4 abgeführte Raumluft gemeint, die das Gebäude stromabwärts des Auslasselements 33 als Fortluft verlässt.

Die Abluft ist dem Raumlüftungsmodul 2 in diesem Ausführungsbeispiel von einem im Raum 4 angeordneten Abluftdurchlass 6 in einer ersten Abluftleitung 12 zuführbar. Die Abluft ist gemäss diesem Ausführungsbeispiel mittels der ersten Abluftleitung 12 insbesondere einem zweiten Schalldämpfer 24 zuführbar. Stromabwärts des zweiten Schalldämpfers 24 ist gemäss diesem Ausführungsbeispiel ein zweiter Filter 26 angeordnet. Eine zweite Abluftleitung 14 verläuft vom zweiten Schalldämpfer 24 zum zweiten Filter 26, sodass die Abluft im Betriebszustand durch den zweiten Filter 26 strömen kann, sodass eine gefilterte Abluft erhältlich ist. Die gefilterte Abluft ist mittels der zweiten Abluftleitung 14 einem zweiten Ventilator 22 zuführbar. Die gefilterte Abluft ist mittels der zweiten Abluftleitung 14 vom zweiten Ventilator 22 einem Lufterwärmer 27 zuführbar. Der Lufterwärmer 27 ist über eine zweite Verbindungsleitung 16 mit dem Wärmetauschermodul 3 verbunden, sodass dem Wärmetauscher 31 eine gefilterte, erwärmte Abluft zuführbar ist. Die zweite Verbindungsleitung 16 wird durch eine Raumbegrenzung 7, beispielsweise durch eine Gebäudewand, durch einen Gebäudeboden oder eine Gebäudedecke, in einen Servicebereich, beispielsweise in einen Zwischenraum oder in einen Dachraum, des Gebäudes geführt. Der Wärmetauscher 31 befindet sich im Servicebereich. Der Servicebereich befindet sich insbesondere innerhalb des Dämmperimeters. Das bedeutet, dass der Servicebereich sich innerhalb einer allfälligen Isolation des Gebäudes befindet.

Gemäss diesem Ausführungsbeispiel ist das Wärmetauschermodul 3, insbesondere der Wärmetauscher 31, getrennt vom Raumlüftungsmodul 2. Das Raumlüftungsmodul 2 befindet sich ausserhalb des Servicebereichs. Die gefilterte erwärmte Abluft ist im Wärmetauscher 31 zum Wärmetausch mit der Zuluft einsetzbar, wobei eine abgekühlte gefilterte Abluft über eine dritte Abluftleitung 18 einem Auslasselement 33, umfassend beispielsweise ein Auslasswetterschutzgitter, zum Austritt aus dem Wärmetauschermodul 3 bestimmt ist.

Der Wärmetauscher kann als ein Kreuzstromwärmetauscher, Gegenstromwärmetauscher, Plattenwärmetauscher oder Enthalpiewärmetauscher ausgebildet sein. Die vom Raumlüftungsmodul 2 stammende Abluft strömt somit in Innenraum des Wärmetauschers 31 in entgegengesetzter Richtung zur Zuluft, sodass die Wärme von der Abluft auf die Zuluft übertragen werden kann, die auf die gewünschte Raumlufttemperatur vorgewärmt werden kann.

Der Wärmetauscher 31 kann insbesondere als ein Plattenwärmetauscher ausgebildet sein. Mittels eines Plattenwärmetauschers ist eine grosse Wärmeaustauschfläche bei minimalem Bauvolumen und daher minimalem Eigengewicht des Wärmetauschers erzielbar.

Der Wärmetauscher 31 kann insbesondere als ein Enthalpiewärmetauscher ausgebildet sein. Mittels eines Enthalpiewärmetauschers kann die durch Kondensation von in der Luft enthaltenem Wasser freiwerdende Kondensationsenergie für die Wärmeübertragung nutzbar gemacht werden.

Die erste Verbindungsleitung 13 kann zum Transport der Zuluft vom Wärmetauschermodul 3 zum Raumlüftungsmodul 2 ausgebildet sein. Insbesondere kann die erste Verbindungsleitung 13 ohne Wärmedämmung ausgebildet sein.

Die zweite Verbindungsleitung 16 kann zum Transport der Abluft vom Raumlüftungsmodul 2 zum Wärmetauschermodul 3 ausgebildet sein. Insbesondere kann die zweite Verbindungsleitung 16 ohne Wärmedämmung ausgebildet sein.

Zumindest das Wärmetauschermodul 3 ist ausserhalb des Raums 4 angeordnet. Insbesondere ist zumindest der Wärmetauscher 31 ausserhalb des Raums 4 angeordnet. Die ersten und zweiten Verbindungsleitungen 13, 16 verlaufen durch eine Raumbegrenzung 7, beispielsweise eine Gebäudewand, einen Gebäudeboden oder eine Gebäudedecke. Insbesondere kann jede der ersten oder zweiten Verbindungsleitungen 13, 16 einen kleineren Aussendurchmesser im Vergleich zu den vorbekannten Lösungen aufweisen, weil die ersten und zweiten Verbindungsleitungen des erfindungsgemässen Lüftungssystems keine Wärmedämmung enthalten müssen, d.h. nicht isoliert werden müssen. Dieser Vorteil ermöglicht wesentliche Einsparungen beim Einbau jeder Verbindungsleitung, da der Platzbedarf für jede Verbindungsleitung reduziert ist, für welche keine Isolation vorgesehen werden muss. Die Isolation ist üblicherweise als Isolationsmantel ausgebildet, welche eine Verbindungsleitung umgibt. Wenn die Verbindungsleitung als Rohr mit einem Rohraussendurchmesser ausgebildet ist, würde der Isolationsmantel einen Mantelaussendurchmesser aufweisen, der bis zu dreimal grösser als der Rohraussendurchmesser sein kann. Üblicherweise müssen Luftleitungen wärmegedämmt werden, wenn es sich um Aussenluftleitungen innerhalb der thermischen Gebäudehülle handelt, z.B. Leitungen, die in Betondecken eingelegt sind. Zudem müssen Fortluftleitungen innerhalb der thermischen Gebäudehülle, z.B. Leitungen in Steigzonen, wärmegedämmt werden, sowie Zuluftleitungen ausserhalb der thermischen Gebäudehülle, z.B. Leitungen in unbeheizten Räumen im Untergeschoss, oder Abluftleitungen ausserhalb der thermischen Gebäudehülle.

Gemäss einer Variante kann ein Temperatursensor 10 vorgesehen sein, mittels welchem die Temperatur der Zuluft stromabwärts des Wärmetauschermoduls 3 gemessen werden kann. Der Temperatursensor 10 kann insbesondere an der zum Raumlüftungsmodul 2 führenden ersten Verbindungsleitung 13 angebracht sein, um die Temperatur der in der ersten Verbindungsleitung 13 strömenden Zuluft zu ermitteln. Wenn die Temperatur der Aussenluft unter einen bestimmten Minimalwert absinkt, kann der Lufterwärmer 27 eingeschaltet werden, um die in der zweiten Abluftleitung 14 strömende Abluft zu erwärmen. Die erwärmte Abluft gelangt durch die zweite Verbindungsleitung 16 zum Wärmetauscher 31. Die mittels des Lufterwärmers 27 zugeführte Wärmeenergie dient somit dazu, die durch die Zuluftleitung 11 in den Wärmetauscher 31 einströmende Zuluft vorzuwärmen. Der Minimalwert der vom Temperatursensor 10 ermittelten Temperatur kann beispielsweise 16 Grad Celsius betragen. Wenn die vom Temperatursensor 10 ermittelte Temperatur unter den Minimalwert absinkt, kann eine nicht näher dargestellte Regeleinrichtung ein Signal zum Einschalten des Lufterwärmers 27 erzeugen und die Inbetriebnahme des Lufterwärmers 27 auslösen. Der Lufterwärmer 27 kann abgeschaltet werden, wenn die Temperatur um eine bestimmte Temperaturdifferenz ΔT höher ist als der Minimalwert. Die Temperaturdifferenz ΔT kann beispielsweise 1 Grad Celsius betragen. Gemäss diesem Ausführungsbeispiel wird der Lufterwärmer 27 abgeschaltet, wenn die vom Temperatursensor 10 gemessene Temperatur 17 Grad Celsius beträgt.

Gemäss einem Ausführungsbeispiel wird die Abluft, welche den Lufterwärmer 27 durchströmt, mittels einer heisses Wasser enthaltenden Heisswasserleitung erwärmt. Wenn heisses Wasser eines Heizkreislaufs zur Verfügung steht, kann die Wärmeenergie des heissen Wassers kostengünstig genutzt werden. Zudem ist die Verwendung eines mit heissem Wasser betriebenen Lufterwärmers 27 energetisch günstiger als die Verwendung eines mittels elektrischer Energie betriebenen Lufterwärmers 27, d.h. beispielsweise eines Lufterwärmers, welcher eine Widerstandsheizung oder eine elektrisch betriebene Heizwendel enthält. Selbstverständlich soll aber die Verwendung eines mittels elektrischer Energie betriebenen Luftvorwärmers nicht als mögliche Variante ausgeschlossen werden, sie ist in einigen Anwendungen weniger bevorzugt, beispielsweise wenn der Staudruck in einem, mittels heissem Wasser betriebenen Lufterwärmer, wesentlich höher ist. Je nach Einsatzort kann der Betrieb des Lufterwärmers eventuell nur selten erforderlich sein. Beispielsweise kann der Lufterwärmer nur dann zum Einsatz kommen, wenn die Aussentemperatur auf - 2 Grad Celsius absinkt. Gemäss einigen Ausführungsbeispielen kommt der Lufterwärmer zum Einsatz, wenn die Aussentemperatur auf - 8 Grad Celsius absinkt. Daher wird für jeden Einsatzort der Lufterwärmer mit den geringstmöglichen Betriebskosten und dem geringstmöglichen Energieaufwand ausgewählt.

Gemäss einem Ausführungsbeispiel kann der Volumenstrom durch den ersten Ventilator 21 und der Volumenstrom durch den zweiten Ventilator 22 verändert werden. Beispielsweise kann der Volumenstrom durch jeden der ersten und zweiten Ventilatoren 21, 22 stufenweise verändert werden. Gemäss einem Ausführungsbeispiel kann eine Grundlüftung, eine Normallüftung und eine Intensivlüftung vorgesehen werden. Der Mittelwert des Volumenstroms beträgt bei Grundlüftung insbesondere im Wesentlichen 50% des Mittelwerts bei Normallüftung. Der Mittelwert des Volumenstroms bei Intensivlüftung liegt um 50% über dem Mittelwert des Volumenstroms bei Grundlüftung.

Gemäss einem Ausführungsbeispiel wird die Aussenluft über eine Fassade des Gebäudes zugeführt und die Fortluft wird über eine Fassade des Gebäudes abgeführt.

Im Raum 4 sind eine oder mehrere Luftquellen und/oder Luftsenken 8 angeordnet. Der erste Ventilator 21 und der zweite Ventilator 22 sind bei einer Inbetriebnahme der zuschaltbaren Luftquelle oder Luftsenke 8 im Raum 4 abschaltbar. Sobald eine Luftquelle oder Luftsenke eingeschaltet wird, wird der Schaltvorgang des Einschaltens von der Störungsüberwachungseinheit registriert. Die Störungsüberwachungseinheit schaltet den ersten und zweiten Ventilator 21, 22 aus, sodass die durch das Einschalten der Luftquelle oder der Luftsenke 8 erzeugte Veränderung des Luftdrucks durch die Luftquelle oder Luftsenke durch die Steuerung der Luftquelle oder Luftsenke, beispielsweise durch ein geregeltes Lüftungsfenster, eine Lüftungsklappe oder eine zusätzliche Lüftungsanlage ausgeglichen werden kann. Die Störungsüberwachungseinheit überwacht das Einschalten der Luftquelle oder Luftsenke durch Detektion der elektrischen Spannung, welche an einem Kontaktelement beim Einschalten der Luftquelle oder Luftsenke anliegt, wenn der Stromkreis zur Luftquelle oder Luftsenke durch Betätigung eines Schliesselements, beispielsweise durch ein Umlegen eines elektrischen Schalters oder durch ein Auslösen eines Einschalttasters, geschlossen wird. Von der Störungsüberwachungseinheit wird ein Ausschaltsignal an eine Antriebseinheit des ersten und zweiten Ventilators 21, 22 übermittelt. Die Antriebseinheit des ersten und zweiten Ventilators 21, 22 weist ein Schaltelement auf, welches ausgeschaltet wird, wenn das Ausschaltsignal von der Störungsüberwachungseinheit am Schaltelement anliegt.

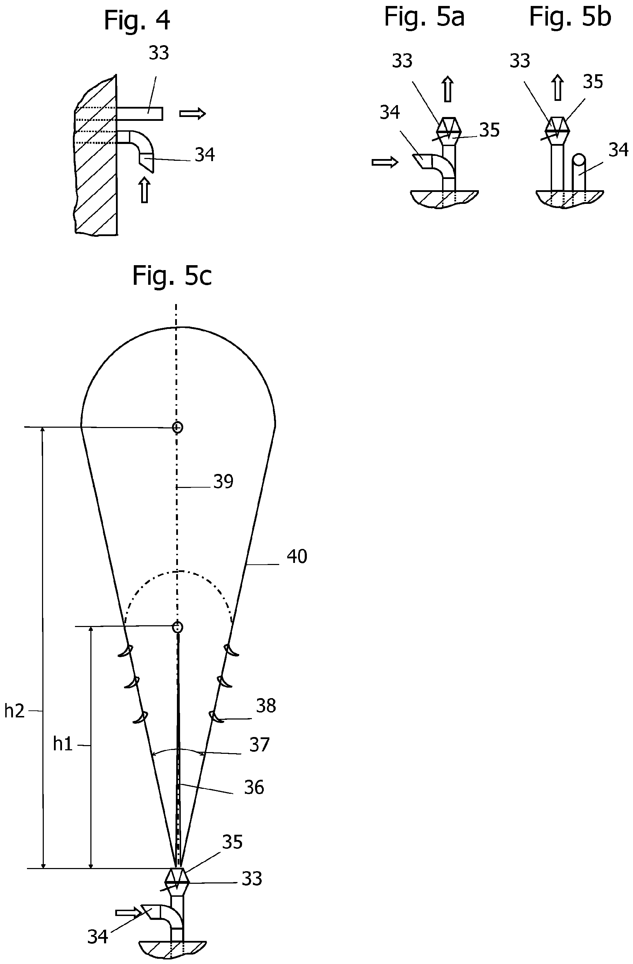

Fig. 4 zeigt ein Detail einer Gebäudefassade, an welcher ein Auslasselement 33 und ein Einlasselement 34 angebracht ist. Hierzu kann das Einlasselement 34 ein Rohrelement umfassen, welches einen Rohrbogen enthält. Das Auslasselement 33 kann ebenfalls ein Rohrelement umfassen. Das zum Auslasselement 33 gehörige Rohrelement kann insbesondere keinen Rohrbogen umfassen.

Fig. 5a, 5b und 5c zeigen ein Detail einer Gebäudedecke, beispielsweise ein Flachdach, an welcher ein Auslasselement 33 und ein Einlasselement 34 angebracht ist. Hierzu kann das Einlasselement 34 ein Rohrelement umfassen, welches einen Rohrbogen enthält. Das Auslasselement 33 kann ebenfalls ein Rohrelement umfassen. Das zum Auslasselement 33 gehörige Rohrelement kann insbesondere keinen Rohrbogen umfassen. Gemäss dem vorliegenden Ausführungsbeispiel umfasst das Auslasselement 33 eine Deflektorhaube 35. Eine Deflektorhaube 35 ermöglicht die Ableitung von Regenwasser, sodass kein Regenwasser in das in vertikaler Richtung verlaufende Rohrelement eintreten kann.

Die Anordnung des Auslasselements 33 und des Einlasselements 34 ist aufgrund des Verlaufs der Luftströmung besonders vorteilhaft, was in Fig. 5c verdeutlicht wird. Fig. 5c zeigt das Einlasselement 34, mittels welchem Aussenluft aus der Umgebung angesaugt wird. Das Einlasselement 34 kann ein Einlasswetterschutzgitter enthalten, welches in der vorliegenden Darstellung nicht sichtbar ist. Das Ende des horizontalen Rohrabschnitts des Einlasselements hat gemäss diesem Ausführungsbeispiel elliptischen Querschnitt, da dessen Querschnittsfläche nicht im rechten Winkel zur Mittenachse des Rohrabschnitts verläuft. Die am Eintrittsende befindliche Eintrittsöffnung ist somit gegen unten geöffnet, sodass von oben auf den Rohrabschnitt tropfendes Regenwasser nicht in die Eintrittsöffnung gelangen kann.

Der aus der Austrittsöffnung des Auslasselements 33 austretende Luftstrom der Fortluft ist in Fig. 5c visualisiert. Fig. 5c zeigt hierbei zwei Varianten, die erste Variante symbolisiert den Luftstrom bei Normallüftung, die zweite Variante symbolisiert den Luftstrom bei Intensivlüftung. Gemäss einem exemplarischen Beispiel für einen Innendurchmesser des Rohrelements von 125 mm kann der Volumenstrom bei Normallüftung 120 m³/h betragen. Die Austrittsgeschwindigkeit kann für diesen Volumenstrom 2.7 m/s betragen. Der Volumenstrom bei Intensivlüftung kann gemäss diesem exemplarischen Beispiel 230 m³/h betragen. Die Austrittsgeschwindigkeit kann für diesen Volumenstrom 5.2 m/s betragen.

Für ein Ausführungsbeispiel mit einer Deflektorhaube 35 tritt die Fortluft, welche die Austrittsöffnung der Deflektorhaube 35 verlässt als konischer Luftstrahl 40 aus. Der Öffnungswinkel des Konus, nachfolgend als Strahlwinkel 37 bezeichnet, kann beispielsweise 25 Grad betragen. Der Luftstrahl umfasst einen Kernstrahl 36, der entlang der Strahlachse 39 verläuft. Die Strahlachse 39 fällt gemäss diesem Ausführungsbeispiel mit der Mittenachse des Konus zusammen. Der Luftstrahl ist gekennzeichnet durch eine unmittelbar an die Austrittsöffnung des Auslasselements 33 anschliessende Mischzone und einer Emissionszone 38 für Sekundärluft.

Gemäss obigem exemplarischen Ausführungsbeispiel weist der Kernstrahl 36 in einer Distanz h1 von 3750 mm eine Austrittsgeschwindigkeit von 0.5 m/s auf, wenn das Lüftungssystem im Betriebszustand der Normallüftung befindet.

Gemäss obigem exemplarischen Ausführungsbeispiel weist der Kernstrahl 36 in einer Distanz h2 von 6900 mm eine Austrittsgeschwindigkeit von 0.5 m/s auf, wenn das Lüftungssystem im Betriebszustand der Intensivlüftung befindet.

Da der Luftstrahl der Fortluft stromabwärts der Austrittsöffnung zumindest in der Mischzone auch ausserhalb des Kernstrahls 36 in einem Winkelbereich des Strahlwinkels 37 von maximal 25 Grad fokussiert bleibt, wird die Aussenluft nicht über die Eintrittsöffnung des Einlasselements 34 angesaugt, wenn sich der Winkel der Mittenachse des Einlasselements 34 im Bereich der Eintrittsöffnung im Wesentlichen 90 Grad vom Winkel der Mittenachse des Auslasselements 34 und der in Richtung dieser Mittenachse verlaufenden Strahlachse 39 des Luftstroms der Fortluft unterscheidet.

Fig. 6 zeigt eine schematische Darstellung eines Lüftungssystems 50 nach einem zweiten Ausführungsbeispiel, welches einen Raum 4, ein Raumlüftungsmodul 2 und ein Wärmetauschermodul 3 umfasst. Gleiche oder gleich wirkende Bauelemente tragen dieselben Bezugszeichen wie in den vorhergehenden Abbildungen. Dem Wärmetauschermodul 3 ist Aussenluft als Zuluft über eine Zuluftleitung 11 zuführbar. Die Zuluftleitung 11 führt von einem Einlasselement 34 für die Aussenluft, welches ein Einlasswetterschutzgitter umfassen kann, zu einem Wärmetauscher 31. In der Zuluftleitung 11 befindet sich gemäss diesem Ausführungsbeispiel ein Einlassfilter 32, der beispielsweise als Rollbandfilter ausgebildet ist. Wenn der Einlassfilter 32 als Rollbandfilter ausgebildet ist, kann dieser mittels eines Photovoltaikmoduls und/oder einem Akku betrieben werden. Wenn eine Kombination eines Photovoltaikmoduls mit einem Akku vorgesehen ist, kann der Akku als Energiespeicher dienen. Eine erste Verbindungsleitung 13 führt vom Wärmetauscher 31 zu einem Zuluftdurchlass 5, welcher sich in einem Raum 4 des Gebäudes befindet. Dieses Lüftungssystem 50 umfasst eine sogenannte Kaskadenlüftung, wie sie vielfach für die Belüftung eines Raums 4, der eine Mehrzahl von Teilräumen 41, 42, 43 enthält, eingesetzt wird.

Exemplarisch sind in diesem Ausführungsbeispiel ein erster Teilraum 41, ein zweiter Teilraum 42 und ein dritter Teilraum 43 gezeigt. Der zweite Teilraum 42 bildet einen Korridor für die durch den Zulaufdurchlass 5 in den ersten Teilraum 41 einströmende Zuluft aus. Die Strömungsrichtung des Luftstroms in den ersten, zweiten und dritten Teilräumen 41, 42, 43 ist schematisch durch Pfeile angedeutet. Die ersten, zweiten und dritten Teilräume 41, 42, 43 können Zwischenwände enthalten, die über luftdurchlässige Öffnungen, beispielsweise Türen, miteinander verbunden sind, sodass der Luftstrom vom ersten Teilraum 41 in den zweiten Teilraum 42 und dritten Teilraum 43 strömen kann. Der dritte Teilraum 43 kann gemäss einem nicht dargestellten Ausführungsbeispiel auch entfallen, es handelt sich somit um ein optionales Merkmal, welches kein notwendiger Bestandteil des Lüftungssystems 50 sein muss. Selbstverständlich können auch mehr als drei Teilräume vorgesehen sein, welche einen Raum 4 ausbilden. Jeder der Räume oder Teilräume kann als Zimmer ausgebildet sein. Gemäss einer nicht dargestellten Variante kann mindestens einer der Teilräume als Korridor ausgebildet sein. Gemäss dem vorliegenden Ausführungsbeispiel befindet sich im dritten Teilraum 43 ein Abluftdurchlass 6. Vom Abluftdurchlass 6 führt eine erste Abluftleitung 12 zum Raumlüftungsmodul 2.

Die erste Verbindungsleitung 13 führt vom Wärmetauschermodul 3 in einen Zuluftdurchlass 5 zur Belüftung des Raums 4 mit Aussenluft. Stromabwärts des ersten Ventilators 21 kann in der Verbindungsleitung zwischen dem ersten Ventilator 21 und dem Zuluftdurchlass 5 ein erster Filter 25 oder ein erster Schalldämpfer 23 vorgesehen sein, wie in Fig. 3 gezeigt ist. Dieser erste Ventilator 21, der erste Filter 25 sowie der erste Schalldämpfer 23 wären in diesem Ausführungsbeispiel dem Raumlüftungsmodul 2 zuzuordnen, wie in Fig. 3 gezeigt.

Das Raumlüftungsmodul 2 gemäss Fig. 6 enthält den ersten Ventilator 21, einen zweiten Ventilator 22 und einen stromabwärts des zweiten Ventilators 22 angeordneten Lufterwärmer 27. Gegebenenfalls kann die erste Abluftleitung 12, wie in Fig. 3 gezeigt ist, einen zweiten Schalldämpfer 24 enthalten, falls die Lärmbelastung durch die aus dem dritten Teilraum 43 des Raums 4 abströmende Abluft zu hoch ist. Gegebenenfalls kann das Raumlüftungsmodul 2 einen zweiten Filter 26 enthalten, sodass die Abluft am Eintrittsende des zweiten Ventilators 22 als gefilterte Abluft vorliegt, um Verunreinigungen des zweiten Ventilators 22 zu vermeiden.

Die Abluft ist mittels der ersten Abluftleitung 12 dem zweiten Ventilator 22 zuführbar. Die Abluft ist mittels der zweiten Abluftleitung 14 vom zweiten Ventilator 22 einem Lufterwärmer 27 zuführbar. Der Lufterwärmer 27 ist über die zweite Verbindungsleitung 16 mit dem Wärmetauschermodul 3 verbunden, sodass dem Wärmetauscher 31 eine gefilterte, erwärmte Abluft zuführbar ist. Die zweite Verbindungsleitung 16 wird durch eine Raumbegrenzung 7 in einen Servicebereich des Gebäudes geführt, wobei die Raumbegrenzung 7 beispielsweise eine Gebäudewand, ein Gebäudeboden oder eine Gebäudedecke umfassen kann. Der Servicebereich kann beispielsweise ein Zwischenraum, Kellerraum oder ein Dachraum sein. Der Wärmetauscher 31 befindet sich im Servicebereich. Der Servicebereich befindet sich insbesondere innerhalb des Dämmperimeters. Das bedeutet, dass der Servicebereich sich innerhalb einer allfälligen Isolation des Gebäudes befindet.

Gemäss diesem Ausführungsbeispiel ist das Wärmetauschermodul 3, insbesondere der Wärmetauscher 31, getrennt vom Raumlüftungsmodul 2. Das Raumlüftungsmodul 2 befindet sich ausserhalb des Servicebereichs. Die erwärmte Abluft ist im Wärmetauscher 31 zum Wärmetausch mit der Aussenluft einsetzbar, sodass eine abgekühlte Abluft den Wärmetauscher 31 und das Wärmetauschermodul 3 verlässt. Der Austritt der Abluft aus dem Wärmetauschermodul 3 kann mittels eines Auslasselements 33, umfassend beispielsweise ein Auslasswetterschutzgitter, erfolgen, welches mit dem Wärmetauscher 31 über eine über eine dritte Abluftleitung 18 verbunden ist. Die aus dem Auslasselement 33 austretende Abluft wird als Fortluft bezeichnet.

Der Wärmetauscher kann als ein Kreuzstromwärmetauscher, Gegenstromwärmetauscher, Plattenwärmetauscher oder Enthalpiewärmetauscher ausgebildet sein. Die vom Raumlüftungsmodul 2 stammende Abluft strömt somit in Innenraum des Wärmetauschers 31 in entgegengesetzter Richtung zur Aussenluft, sodass die Wärme von der Abluft auf die Aussenluft übertragen werden kann, die auf die gewünschte Raumlufttemperatur vorgewärmt werden kann.

Der Wärmetauscher 31 kann insbesondere als ein Plattenwärmetauscher ausgebildet sein. Mittels eines Plattenwärmetauschers ist eine grosse Wärmeaustauschfläche bei minimalem Bauvolumen und daher minimalem Eigengewicht des Wärmetauschers erzielbar.

Der Wärmetauscher 31 kann insbesondere als ein Enthalpiewärmetauscher ausgebildet sein. Mittels eines Enthalpiewärmetauschers kann die durch Kondensation von in der Luft enthaltenem Wasser freiwerdende Kondensationsenergie für die Wärmeübertragung nutzbar gemacht werden.

Die erste Verbindungsleitung 13 kann zum Transport der Aussenluft vom Wärmetauschermodul 3 zum Raumlüftungsmodul 2 ausgebildet sein. Insbesondere kann die erste Verbindungsleitung 13 ohne Wärmedämmung ausgebildet sein.

Die zweite Verbindungsleitung 16 kann zum Transport der Abluft vom Raumlüftungsmodul 2 zum Wärmetauschermodul 3 ausgebildet sein. Insbesondere kann die zweite Verbindungsleitung 16 ohne Wärmedämmung ausgebildet sein.

Zumindest das Wärmetauschermodul 3 ist ausserhalb des Raums 4 angeordnet. Insbesondere ist zumindest der Wärmetauscher 31 ausserhalb jedes ersten zweiten oder dritten Teilräume 41, 42, 43 angeordnet. Die ersten und zweiten Verbindungsleitungen 13, 16 verlaufen durch eine Raumbegrenzung 7, beispielsweise eine Gebäudewand, einen Gebäudeboden oder eine Gebäudedecke.

Insbesondere kann jede der ersten oder zweiten Verbindungsleitungen 13, 16 einen kleineren Aussendurchmesser im Vergleich zu den vorbekannten Lösungen aufweisen, weil ersten und zweiten Verbindungsleitungen des erfindungsgemässen Lüftungssystems keine Wärmedämmung enthalten müssen, d.h. nicht isoliert werden müssen.

Gemäss einer Variante kann ein Temperatursensor 10 vorgesehen sein, mittels welchem die Temperatur der Zuluft stromabwärts des Wärmetauschermoduls 3 gemessen werden kann. Der Temperatursensor 10 kann insbesondere an der zum Raumlüftungsmodul 2 führenden ersten Verbindungsleitung 13 angebracht sein, um die Temperatur der in der ersten Verbindungsleitung 13 strömenden Zuluft zu ermitteln. Wenn die Temperatur der Aussenluft unter einen bestimmten Minimalwert absinkt, kann der Lufterwärmer 27 eingeschaltet werden, um die in der zweiten Abluftleitung 14 strömende Abluft zu erwärmen. Die erwärmte Abluft gelangt durch die zweite Verbindungsleitung 16 zum Wärmetauscher 31. Die mittels des Lufterwärmers 27 zugeführte Wärmeenergie dient somit dazu, die durch die Zuluftleitung 11 in den Wärmetauscher 31 einströmende Zuluft vorzuwärmen. Der Minimalwert der vom Temperatursensor 10 ermittelten Temperatur kann beispielsweise 16 Grad Celsius betragen. Wenn die vom Temperatursensor 10 ermittelte Temperatur unter den Minimalwert absinkt, kann eine nicht näher dargestellte Regeleinrichtung ein Signal zum Einschalten des Lufterwärmers 27 erzeugen und die Inbetriebnahme des Lufterwärmers 27 auslösen. Der Lufterwärmer 27 kann abgeschaltet werden, wenn die Temperatur um eine bestimmte Temperaturdifferenz ΔT höher ist als der Minimalwert. Die Temperaturdifferenz ΔT kann beispielsweise 1 Grad Celsius betragen. Gemäss diesem Ausführungsbeispiel wird der Lufterwärmer 27 abgeschaltet, wenn die vom Temperatursensor 10 gemessene Temperatur 17 Grad Celsius beträgt.

Gemäss einem Ausführungsbeispiel wird die Abluft, welche den Lufterwärmer 27 durchströmt, mittels einer heisses Wasser enthaltenden Heisswasserleitung erwärmt. Wenn heisses Wasser eines Heizkreislaufs zur Verfügung steht, kann dessen Wärmeenergie kostengünstig genutzt werden. Zudem ist die Verwendung eines mit heissem Wasser betriebenen Lufterwärmers 27 energetisch günstiger als die Verwendung eines mittels elektrischer Energie betriebenen Lufterwärmers 27, d.h. beispielsweise eines Lufterwärmers, welcher eine Widerstandsheizung oder eine elektrisch betriebene Heizwendel enthält. Selbstverständlich soll aber die Verwendung eines mittels elektrischer Energie betriebenen Luftvorwärmers nicht als mögliche Variante ausgeschlossen werden, sie ist in einigen Anwendungen weniger bevorzugt, beispielsweise wenn der Staudruck in einem, mittels heissem Wasser betriebenen Lufterwärmer wesentlich höher ist. Je nach Einsatzort kann der Betrieb des Lufterwärmers eventuell nur selten erforderlich sein. Beispielsweise kann der Lufterwärmer nur dann zum Einsatz kommen, wenn die Aussentemperatur auf - 2 Grad Celsius absinkt. Gemäss einigen Ausführungsbeispielen kommt der Lufterwärmer zum Einsatz, wenn die Aussentemperatur auf - 8 Grad Celsius absinkt. Daher wird für jeden Einsatzort der Lufterwärmer mit den geringstmöglichen Betriebskosten und dem geringstmöglichen Energieaufwand ausgewählt.

Gemäss einem Ausführungsbeispiel kann der Volumenstrom durch den ersten Ventilator 21 und der Volumenstrom durch den zweiten Ventilator 22 verändert werden. Beispielsweise kann der Volumenstrom durch jeden der ersten und zweiten Ventilatoren 21, 22 stufenweise verändert werden. Gemäss einem Ausführungsbeispiel kann eine Grundlüftung, eine Normallüftung und eine Intensivlüftung vorgesehen werden. Der Mittelwert des Volumenstroms beträgt bei Grundlüftung insbesondere im Wesentlichen 50% des Mittelwerts bei Normallüftung. Der Mittelwert des Volumenstroms bei Intensivlüftung liegt um 50% über dem Mittelwert des Volumenstroms bei Grundlüftung.

Gemäss jedem der vorhergehenden Ausführungsbeispiele insbesondere gemäss einer der Fig. 3 oder 6, kann der erste Filter 25 stromabwärts des ersten Ventilators 21 angeordnet werden. Der erste Filter 25 kann auch stromabwärts des ersten Schalldämpfers 23 angeordnet werden. Gemäss jedem der Ausführungsbeispiele sind der erste Ventilator 21, der erste Filter 25 und der Schalldämpfer erste 23 stromaufwärts des Zuluftdurchlasses 5, insbesondere stromaufwärts der zweiten Zuluftleitung 17, angeordnet.

Gemäss jedem der vorhergehenden Ausführungsbeispiele, insbesondere gemäss einer der Fig. 3 oder 6, kann der zweite Filter 26 stromaufwärts des zweiten Schalldämpfers 24 angeordnet werden. Gemäss jedem der Ausführungsbeispiele sind der zweite Filter 26 und der zweite Schalldämpfer 24 stromabwärts des Abluftdurchlasses 6, insbesondere stromaufwärts der ersten Abluftleitung 12, angeordnet.

Gemäss jedem der Ausführungsbeispiele kann der Zuluftdurchlass 5 als Zuluftventil ausgebildet sein. Gemäss jedem der Ausführungsbeispiele kann der Abluftdurchlass 6 als Abluftventil ausgebildet sein.

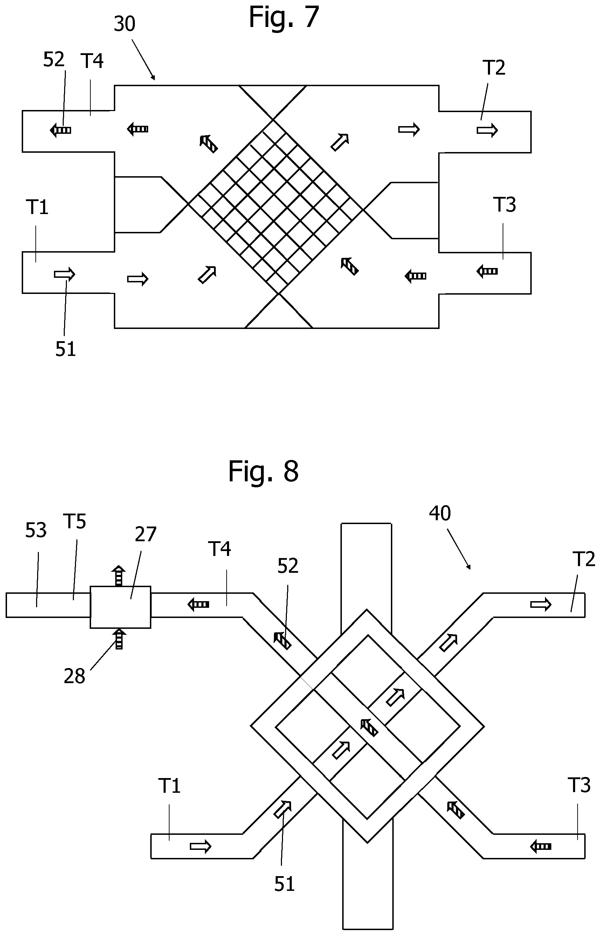

Fig. 7 zeigt ein Ausführungsbeispiel eines Wärmetauschers 30, im vorliegenden Beispiel ist ein Kreuzstrom-Wärmetauscher schematisch dargestellt. Wie in jedem Wärmetauscher wird auch in diesem Kreuzstrom-Wärmetauscher Wärme zwischen einem ersten Fluidstrom 51 und einem zweiten Fluidstrom 52 ausgetauscht. Der erste Fluidstrom 51 wird von einer Temperatur T1 auf eine Temperatur T2 erwärmt. Der zweite Fluidstrom 52 wird von einer Temperatur T3 auf eine Temperatur T4 abgekühlt. Dabei gilt, dass T3>T2 ist, damit eine Wärmeübertragung vom zweiten Fluidstrom auf den ersten Fluidstrom erfolgen kann. Der erste Fluidstrom kann Frischluft sein, welche im Wärmetauscher vorgewärmt wird und als vorgewärmte Zuluft in den oder die Räume eins Gebäudes verteilt werden kann. Der zweite Fluidstrom kann eine warme Abluft sein, die aus dem oder den Räumen abgesaugt wird und den Wärmetauscher als verbrauchte Fortluft in die Umgebung abgegeben wird. Ein derartiger Wärmetauscher ist beispielsweise im Wärmetauschermodul gemäss Fig. 3 oder Fig. 6 als Wärmetauscher 31 vorgesehen. Diesem Wärmetauscher oder dem ersten oder zweiten Fluidstrom 51, 52 wird keine zusätzliche Energie zugeführt, daher wird dieser Wärmetauscher auch als passiver Wärmetauscher bezeichnet.

Fig. 8 zeigt ein Ausführungsbeispiel eines Wärmetauschers 40, dessen zweiter Fluidstrom 52 mittels eines Lufterwärmers 27 erwärmt wird, sodass ein erwärmter Fluidstrom 53 erhalten wird. Der Wärmetauscher 40 unterscheidet sich vom Wärmetauscher 30 dahingehend, dass der erste und der zweite Fluidstrom 51, 52 nicht auf mehrere Teilströme aufgeteilt werden. Der auf die Temperatur T4 erwärmte zweite Fluidstrom wird dem Lufterwärmer 27 zugeführt.

Im Lufterwärmer 27 nur ein einziger Fluidstrom erwärmt. Die Erwärmung erfolgt dabei mittels einer externen Wärmequelle 28, beispielsweise durch die Wärmeabgabe eines im Fluidstrom befindlichen elektrischen Widerstands, einer Infrarotheizung oder eines Infrarotstrahlers. Als externe Wärmequelle 28 wird eine Wärmequelle bezeichnet, die keine Raumluft enthält oder mittels Raumluft betreibbar ist. Der zweite Fluidstrom 52 wird an der Wärmequelle 28 vorbeigeführt und erwärmt sich durch Kontakt mit der Wärmequelle 28. Alternativ kann ein Wärmeträgerfluid als Wärmequelle verwendet werden, beispielsweise Heisswasser oder Öl. Da die Bereitstellung der Wärme, die dem zweiten Fluidstrom 52 zugeführt wird, mittels der Wärmequelle 28 die Verwendung einer zusätzlichen Energiequelle erfordert, wird der Lufterwärmer als aktiver Wärmeüberträger bezeichnet. Wird die Zuluft, wie in Fig. 7 gezeigt, mittels eines passiven Wärmetauschers 40 vorgewärmt, ist nur der Energiebedarf zur Erzeugung der Temperaturdifferenz T5-T4 erforderlich. Daher kann eine Wärmequelle 28 mit geringerer Wärmeleistung zum Einsatz kommen, wenn der passive Wärmetauscher 40 zum Einsatz kommt, um den ersten Fluidstrom 52 auf die Temperatur T4 vorzuwärmen.

Für den Fachmann ist offensichtlich, dass viele weitere Varianten zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C bis N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Lüftungssystem (1) umfassend mindestens einen Raum (4) eines Gebäudes, ein Raumlüftungsmodul (2) und ein Wärmetauschermodul (3), wobei das Raumlüftungsmodul (2) im Raum (4) angeordnet ist, wobei das Wärmetauschermodul (3) ausserhalb des Raums (4) angeordnet ist, wobei der Raum (4) mindestens eine temporär zuschaltbare Luftquelle oder Luftsenke (8) enthält, wobei dem Wärmetauschermodul (3) Aussenluft über ein Einlasselement (34) als Zuluft zuführbar ist und Abluft über ein Auslasselement (33) als Fortluft abführbar ist, wobei eine erste Verbindungsleitung (13) zum Transport der Zuluft vom Wärmetauschermodul (3) zum Raumlüftungsmodul (2) ausgebildet ist, wobei eine zweite Verbindungsleitung (16) zum Transport der Abluft vom Raumlüftungsmodul (2) zum Wärmetauschermodul (3) ausgebildet ist, wobei das Wärmetauschermodul (3) vom Raumlüftungsmodul (2) durch eine Raumbegrenzung (7) räumlich getrennt ist, wobei das Raumlüftungsmodul (2) einen ersten Ventilator (21) zum Transport der Zuluft durch die erste Verbindungsleitung (13) in den Raum (4) und einen zweiten Ventilator (22) zum Transport der Abluft durch die zweite Verbindungsleitung (16) aus dem Raum (4) enthält, wobei der erste Ventilator (21) und der zweite Ventilator (22) bei einer Inbetriebnahme der zuschaltbaren Luftquelle oder Luftsenke (8) im Raum (4) abschaltbar sind, wobei das Lüftungssystem einer Regelung von Zu- und Abluft für einen konstanten Volumenstrom ausgestattet ist, welche keine Druckdifferenz im Raum entstehen lässt, wobei das Lüftungssystem mit einer integrierten Störungsüberwachungseinheit ausgestattet ist, sodass, sobald eine Luftquelle oder Luftsenke eingeschaltet wird, die Störungsüberwachungseinheit diese Situation erkennt und den ersten und zweiten Ventilator temporär ausschaltet.

2. Lüftungssystem (1) nach Anspruch 1, wobei das Raumlüftungsmodul (2) einen Lufterwärmer (27) enthält.

3. Lüftungssystem (1) nach einem der vorhergehenden Ansprüche, wobei zumindest ein Messwertaufnehmer aus der Gruppe enthaltend einen Temperatursensor (10), einen Luftfeuchtigkeitssensor, einen Sensor zur Detektion von Schadstoffen, beispielsweise einen VOC-Sensor, oder einen Sensor zur Detektion einer Konzentration von COz, vorgesehen ist.

4. Lüftungssystem (1) nach Ansprüchen 2 und 3, wobei eine Regeleinrichtung vorgesehen ist, mittels welcher der Lufterwärmer (27) zur Erwärmung der Abluft oder der Zuluft einschaltbar ist, wenn die Temperatur der Zuluft unter einen bestimmten Minimalwert absinkt.

5. Lüftungssystem (1) nach einem der vorhergehenden Ansprüche, wobei die Aussenluft dem Wärmetauschermodul (3) über eine Luftleitung (11) zuführbar ist, wobei die Luftleitung (11) vom Einlasselement (34) zu einem Einlassfilter (32) und zu einem Wärmetauscher (31) führt.

6. Lüftungssystem (1) nach einem der vorhergehenden Ansprüche, wobei das Raumlüftungsmodul (2) einen ersten Filter (25), den ersten Ventilator (21) und/oder einen ersten Schalldämpfer (23) enthält, wobei die mit dem Wärmetauschermodul (3) verbundene erste Verbindungsleitung (13) mit dem ersten Filter (25), dem ersten Ventilator (21) und/oder dem ersten Schalldämpfer (23) verbunden ist, wobei der erste Filter (25), der erste Ventilator (21) und/oder der erste Schalldämpfer (23) über eine erste Zuluftleitung (15) miteinander in beliebiger Reihenfolge verbunden sind.

7. Lüftungssystem (1) nach einem der vorhergehenden Ansprüche, wobei eine zweite Zuluftleitung (17) vom Raumlüftungsmodul (2) in einen Zuluftdurchlass (5) zur Belüftung des Raums (4) mit der Zuluft führt.

8. Lüftungssystem (1) nach einem der vorhergehenden Ansprüche, wobei die Abluft dem Raumlüftungsmodul (2) von einem Abluftdurchlass (6) in einer ersten Abluftleitung (12) zuführbar ist, wobei die Abluft im Raumlüftungsmodul (2) dem zweiten Ventilator (22) zuführbar ist, wobei die Abluft mittels einer zweiten Abluftleitung (14) vom zweiten Ventilator (22) zum Lufterwärmer (27) führbar ist, wobei der Lufterwärmer (27) über die zweite Verbindungsleitung (16) mit dem Wärmetauschermodul (3) verbunden ist.

9. Lüftungssystem (1) nach Ansprüchen 2 und 8, wobei die Abluft mittels der ersten Abluftleitung (12) einem zweiten Schalldämpfer (24) und/oder einem zweiten Filter (26) zuführbar ist, wobei eine zweite Abluftleitung (14) vom zweiten Schalldämpfer (24) und/oder vom zweiten Filter (26) zum zweiten Ventilator (22) verläuft, wobei die Abluft mittels der zweiten Abluftleitung (14) vom zweiten Ventilator (22) zum Lufterwärmer (27) führbar ist.

10. Lüftungssystem (1) nach Anspruch 9, wobei dem Wärmetauscher (31) über die zweite Verbindungsleitung (16) eine erwärmte Abluft vom Lufterwärmer (27) zuführbar ist, wobei die erwärmte Abluft im Wärmetauscher (31) zum Wärmetausch mit der Zuluft einsetzbar ist.

11. Lüftungssystem (1) nach einem der vorhergehenden Ansprüche, 5 bis 10, wobei der Wärmetauscher (31) ein Element aus der Gruppe bestehend aus einem Gegenstromwärmetauscher, einem Kreuzstromwärmetauscher, einem Plattenwärmetauscher und einem Enthalpiewärmetauscher enthält.

12. Lüftungssystem (1) nach einem der vorhergehenden Ansprüche 5 bis 11, wobei zumindest der Wärmetauscher (31) ausserhalb des Raums (4) angeordnet ist.

13. Lüftungssystem (1) nach einem der vorhergehenden Ansprüche, wobei zumindest eine der ersten Verbindungsleitungen (13) und zweiten Verbindungsleitungen (16) keine Wärmedämmung enthält.

14. Lüftungssystem (1) nach einem der vorhergehenden Ansprüche, wobei eine abgekühlte Abluft über eine dritte Abluftleitung (18) zum Auslasselement (33) zum Austritt aus dem Wärmetauschermodul (3) führbar ist.

15. Lüftungssystem (1) nach Anspruch 14, wobei das Einlasselement (34) eine Einlassöffnung aufweist, die im Wesentlichen in einem rechten Winkel zu einer Auslassöffnung des Auslasselements (33) angeordnet ist.

## Claims

1. Ventilation system (1) comprising at least one room (4) of a building, a room ventilation module (2) and a heat exchanger module (3), wherein the room ventilation module (2) is arranged in the room (4), wherein the heat exchanger module (3) is arranged outside the room (4), wherein the room (4) contains at least one temporarily switchable air source or air sink (8), wherein outside air can be supplied to the heat exchanger module (3) as supply air via an inlet element (34) and exhaust air can be discharged as discharge air via an outlet element (33), wherein a first connecting duct (13) is configured to transport the supply air from the heat exchanger module (3) to the room ventilation module (2), wherein a second connecting duct (16) is configured to transport the exhaust air from the room ventilation module (2) to the heat exchanger module (3), wherein the heat exchanger module (3) is spatially separated from the room ventilation module (2) by a room boundary (7), wherein the room ventilation module (2) contains a first fan (21) for transporting the supply air through the first connecting duct (13) into the room (4) and a second fan (22) for transporting the exhaust air through the second connecting duct (16) out of the room (4), wherein the first fan (21) and the second fan (22) can be switched off when the switchable air source or air sink (8) in the room (4) is put into operation, wherein the ventilation system is equipped with a control of supply and exhaust air for a constant volume flow which does not create a pressure difference in the room (4), **characterised in that** the first fan (21) and the second fan (22) can be switched off when the switchable air source or air sink (8) in the room (4) is put into operation, wherein the ventilation system is equipped with a regulation of supply and exhaust air for a constant volume flow, which does not allow a pressure difference to arise in the room, wherein the ventilation system is equipped with an integrated fault monitoring unit, so that as soon as an air source or air sink is switched on, the fault monitoring unit recognises this situation and temporarily switches off the first and second fans.

2. The ventilation system (1) of claim 1, wherein the room ventilation module (2) contains an air heater (27).

3. The ventilation system (1) of one of the preceding claims, wherein at least one sensor from the group comprising a temperature sensor (10), a humidity sensor, a sensor for detecting pollutants, for example a VOC sensor, or a sensor for detecting a concentration of CO₂ is provided.

4. The ventilation system (1) of claims 2 and 3, wherein a control device is provided by means of which the air heater (27) can be switched on to heat the exhaust air or the supply air when the temperature of the supply air falls below a certain minimum value.

5. The ventilation system (1) of one of the preceding claims, wherein the outside air can be supplied to the heat exchanger module (3) via an air duct (11), wherein the air duct (11) leads from the inlet element (34) to an inlet filter (32) and to a heat exchanger (31).

6. The ventilation system (1) of one of the preceding claims, wherein the room ventilation module (2) contains a first filter (25), the first fan (21) and/or a first silencer (23), wherein the first connecting duct (13) connected to the heat exchanger module (3) is connected to the first filter (25), the first fan (21) and/or the first silencer (23), wherein the first filter (25), the first fan (21) and/or the first silencer (23) are connected to each other in any order via a first supply air duct (15).

7. The ventilation system (1) of one of the preceding claims, wherein a second supply air duct (17) leads from the room ventilation module (2) into a supply air outlet (5) for ventilating the room (4) with the supply air.

8. The ventilation system (1) of one of the preceding claims, wherein the exhaust air can be fed to the room ventilation module (2) from an exhaust air outlet (6) in a first exhaust air duct (12), wherein the exhaust air in the room ventilation module (2) can be fed to the second fan (22), wherein the exhaust air can be fed from the second fan (22) to the air heater (27) by means of a second exhaust air duct (14), wherein the air heater (27) is connected to the heat exchanger module (3) via the second connecting duct (16).

9. The ventilation system (1) of claims 2 and 8, wherein the exhaust air can be fed to a second silencer (24) and/or a second filter (26) by means of the first exhaust air duct (12), wherein a second exhaust air duct (14) runs from the second silencer (24) and/or from the second filter (26) to the second fan (22), wherein the exhaust air can be fed from the second fan (22) to the air heater (27) by means of the second exhaust air duct (14).

10. The ventilation system (1) of claim 9, wherein a heated exhaust air from the air heater (27) can be supplied to the heat exchanger (31) via the second connecting duct (16), wherein the heated exhaust air can be used in the heat exchanger (31) for heat exchange with the supply air.

11. The ventilation system (1) of one of the preceding claims 5 to 10, wherein the heat exchanger (31) comprises an element selected from the group consisting of a counterflow heat exchanger, a cross-flow heat exchanger, a plate heat exchanger and an enthalpy heat exchanger.

12. The ventilation system (1) of one of the preceding claims 5 to 11, wherein at least the heat exchanger (31) is arranged outside the room (4).

13. The ventilation system (1) of one of the preceding claims, wherein at least one of the first connecting ducts (13) and second connecting ducts (16) does not contain thermal insulation.

14. The ventilation system (1) of one of the preceding claims, wherein a cooled exhaust air can be guided via a third exhaust air duct (18) to the outlet element (33) for discharge from the heat exchanger module (3).

15. The ventilation system (1) of claim 14, wherein the inlet element (34) has an inlet opening which is arranged substantially at a right angle to an outlet opening of the outlet element (33).

## Revendications

1. Système de ventilation (1) comprenant au moins une pièce (4) d'un bâtiment, un module de ventilation de la pièce (2) et un module d'échange de chaleur (3), dans lequel le module de ventilation de la pièce (2) est placé dans la pièce (4), dans lequel le module d'échange de chaleur (3) est placé à l'extérieur de la pièce (4), dans lequel la pièce (4) contient au moins une source d'air ou un puits d'air (8) temporairement commutable, dans lequel l'air extérieur peut être fourni au module d'échange de chaleur (3) en tant qu'air d'alimentation via un élément d'entrée (34) et l'air d'échappement peut être évacué en tant qu'air de décharge via un élément de sortie (33), dans lequel un premier conduit de raccordement (13) est configuré pour transporter l'air d'alimentation du module d'échange de chaleur (3) au module de ventilation de la pièce (2), dans lequel un deuxième conduit de raccordement (16) est configuré pour transporter l'air d'échappement du module de ventilation de la pièce (2) vers le module d'échange de chaleur (3), le module d'échange de chaleur (3) étant séparé spatialement du module de ventilation de la pièce (2) par une limite de la pièce (7), dans lequel le module de ventilation de la pièce (2) contient un premier ventilateur (21) pour transporter l'air d'alimentation par la première conduite de raccordement (13) dans la pièce (4) et un deuxième ventilateur (22) pour transporter l'air d'échappement par la deuxième conduite de raccordement (16) hors de la pièce (4), dans lequel le premier ventilateur (21) et le deuxième ventilateur (22) peuvent être arrêtés lorsque la source d'air ou le puits d'air temporairement commutable (8) dans la pièce (4) est mis en service, dans lequel le système de ventilation est équipé d'une commande d'alimentation et d'évacuation d'air pour un flux de volume constant qui ne crée pas de différence de pression dans la pièce (4), **caractérisé par le fait que** le premier ventilateur (21) et le deuxième ventilateur (22) peuvent être arrêtés lorsque la source d'air ou le puits d'air temporairement commutable (8) dans la pièce (4) est mis en service, dans lequel le système de ventilation est équipé d'une régulation de l'air d'alimentation et de l'air d'échappement pour un débit constant, qui ne permet pas l'apparition d'une différence de pression dans la pièce, dans lequel le système de ventilation est équipé d'une unité de surveillance des pannes intégrée, de sorte que dès qu'une source d'air ou un puits d'air est mis en marche, l'unité de surveillance des pannes reconnaît cette situation et arrête temporairement le premier et le deuxième ventilateur.

2. Le système de ventilation (1) de la revendication 1, dans lequel le module de ventilation de la pièce (2) contient un réchauffeur d'air (27).

3. Le système de ventilation (1) de l'une des revendications précédentes, dans lequel au moins un capteur du groupe comprenant un capteur de température (10), un capteur d'humidité, un capteur de détection de polluants, par exemple un capteur de COV, ou un capteur de détection d'une concentration de CO₂ est prévu.

4. Le système de ventilation (1) des revendications 2 et 3, dans lequel un dispositif de commande est prévu pour permettre au réchauffeur d'air (27) de chauffer l'air d'échappement ou l'air d'alimentation lorsque la température de l'air d'alimentation tombe en dessous d'une certaine valeur minimale.

5. Le système de ventilation (1) de l'une des revendications précédentes, dans lequel l'air extérieur peut être fourni au module d'échange de chaleur (3) via un conduit d'air (11), dans lequel le conduit d'air (11) mène de l'élément d'entrée (34) à un filtre d'entrée (32) et à un échangeur de chaleur (31).

6. Le système de ventilation (1) de l'une des revendications précédentes, dans lequel le module de ventilation de la pièce (2) contient un premier filtre (25), le premier ventilateur (21) et/ou un premier silencieux (23), dans lequel le premier conduit de raccordement (13) connecté au module d'échange de chaleur (3) est connecté au premier filtre (25), le premier ventilateur (21) et/ou le premier silencieux (23), le premier filtre (25), le premier ventilateur (21) et/ou le premier silencieux (23) étant reliés l'un à l'autre dans un ordre quelconque par l'intermédiaire d'un premier conduit d'air d'alimentation (15).

7. Le système de ventilation (1) de l'une des revendications précédentes, dans lequel un deuxième conduit d'air d'alimentation (17) part du module de ventilation de la pièce (2) et aboutit à une sortie d'air d'alimentation (5) pour ventiler la pièce (4) avec l'air d'alimentation.

8. Le système de ventilation (1) de l'une des revendications précédentes, dans lequel l'air d'échappement peut être acheminé vers le module de ventilation de la pièce (2) à partir d'une sortie d'air d'échappement (6) dans un premier conduit d'air d'échappement (12), dans lequel l'air d'échappement dans le module de ventilation de la pièce (2) peut être acheminé vers le deuxième ventilateur (22), l'air d'échappement peut être acheminé du deuxième ventilateur (22) au réchauffeur d'air (27) au moyen d'un deuxième conduit d'air d'échappement (14), le réchauffeur d'air (27) étant relié au module d'échange de chaleur (3) par le deuxième conduit de raccordement (16).

9. Le système de ventilation (1) des revendications 2 et 8, dans lequel l'air d'échappement peut être acheminé vers un deuxième silencieux (24) et/ou un deuxième filtre (26) au moyen du premier conduit d'air d'échappement (12), dans lequel un deuxième conduit d'air d'échappement (14) s'étend du second silencieux (24) et/ou du deuxième filtre (26) au deuxième ventilateur (22), dans lequel l'air d'échappement peut être acheminé du deuxième ventilateur (22) au réchauffeur d'air (27) au moyen du deuxième conduit d'air d'échappement (14).

10. Le système de ventilation (1) de la revendication 9, dans lequel un air d'échappement chauffé provenant du réchauffeur d'air (27) peut être fourni à l'échangeur de chaleur (31) via le deuxième conduit de raccordement (16), dans lequel l'air d'échappement chauffé peut être utilisé dans l'échangeur de chaleur (31) pour l'échange de chaleur avec l'air d'alimentation.

11. Le système de ventilation (1) de l'une des revendications précédentes 5 à 10, dans lequel l'échangeur de chaleur (31) comprend un élément choisi dans le groupe constitué d'un échangeur de chaleur à contre-courant, d'un échangeur de chaleur à flux croisé, d'un échangeur de chaleur à plaques et d'un échangeur de chaleur enthalpique.

12. Le système de ventilation (1) de l'une des revendications précédentes 5 à 11, dans lequel au moins l'échangeur de chaleur (31) est disposé à l'extérieur de la pièce (4).

13. Le système de ventilation (1) de l'une des revendications précédentes, dans lequel au moins l'un des premiers conduits de raccordement (13) et des deuxièmes conduits de raccordement (16) ne contient pas d'isolation thermique.

14. Le système de ventilation (1) de l'une des revendications précédentes, dans lequel un air d'échappement refroidi peut être guidé via un troisième conduit d'air d'échappement (18) vers l'élément de sortie (33) pour être évacué du module d'échange de chaleur (3).

15. Le système de ventilation (1) de la revendication 14, dans lequel l'élément d'entrée (34) a une ouverture d'entrée qui est disposée sensiblement à angle droit par rapport à une ouverture de sortie de l'élément de sortie (33).
